# EUROPEAN PATENT SPECIFICATION

(11) **EP 0 912 665 B1**
(45) Date of publication and mention of the grant of the patent: **16.08.2001**
(21) Application number: 97931750.0
(22) Date of filing: 30.06.1997
(51) Int. Cl.: C11B 3/00, C11B 13/00, A23D 9/02

(54) **PROCESS FOR OBTAINING ORYZANOL**
VERFAHREN ZUR GEWINNUNG VON ORYZANOL
PROCEDE D'OBTENTION D'ORYZANOL

(30) Priority: 05.07.1996 EP 96201870
(43) Date of publication of application: 06.05.1999
(73) Proprietor: UNILEVER N.V., 3013 AL Rotterdam (NL); UNILEVER PLC, London EC4P 4BQ (GB)
(72) Inventor: VAN AMERONGEN, Marnix, P., NL-3133 AT Vlaardingen (NL); HOFMAN, Cornelis, NL-3133 AT Vlaardingen (NL); ZWANENBURG, Arend, NL-3133 AT Vlaardingen (NL)
(74) Representative: Boerma, Caroline
(86) International application number: EP9703491
(87) International publication number: WO9801519

(56) References cited:
- EP-A- 0 710 477
- WO-A-95/30727
- DE-B- 1 301 002
- US-A- 5 290 579
- DATABASE WPI Section Ch, Week 9541 Derwent Publications Ltd., London, GB; Class D23, AN 95-317772 XP002033540 & JP 07 216 381 A (TOKYO YUSHI KOGYO KK) , 15 August 1995
- DATABASE WPI Section Ch, Week 9509 Derwent Publications Ltd., London, GB; Class D23, AN 95-063965 XP002020183 & JP 06 340 889 A (TOKYO YUSHI KOGYO KK) , 13 December 1994
- DATABASE WPI Section Ch, Derwent Publications Ltd., London, GB; Class B00, AN 66-32187F XP002044355 & JP 43 010 860 B (YAMANOUCHI PHARM CO LTD)
- DATABASE WPI Section Ch, Week 8019 Derwent Publications Ltd., London, GB; Class D13, AN 80-33924C XP002033541 & JP 55 010 600 B (TSUCHIYA T) , 17 March 1980
- DATABASE WPI Section Ch, Week 7650 Derwent Publications Ltd., London, GB; Class B01, AN 76-93358X XP002033542 & JP 51 123 811 A (OKAYASU SHOTEN KK) , 28 October 1976
- DATABASE WPI Section Ch, Week 8020 Derwent Publications Ltd., London, GB; Class B01, AN 80-35200C XP002044356 & JP 54 160 400 A (KYOKUTO SHIBOSAN KK) , 19 December 1979
- DATABASE WPI Section Ch, Week 8311 Derwent Publications Ltd., London, GB; Class B01, AN 83-26663K XP002044357 & JP 58 021 619 A (USUKI N) , 8 February 1983
- DATABASE WPI Section Ch, Week 8440 Derwent Publications Ltd., London, GB; Class D23, AN 84-246136 XP002020182 & JP 59 147 099 A (SNOW BRAND MILK PROD CO LTD) , 23 August 1984
- SUK HOO YOON ET AL.: "Oxidative stability of high-fatty acid rice bran oil at different stages of refining" JOURNAL OF THE AMERICAN OIL CHEMISTS' SOCIETY, vol. 71, no. 2, 1994, CHAMPAIGN US, pages 227-229, XP002033539

## Description

The present invention relates to a method for the recovery of oryzanol from a crude oil containing oryzanol, such as crude rice bran oil, or from waste material obtained at the refinery process of crude oil containing oryzanol. Further, the present invention pertains to a method for obtaining an oryzanol concentrate which is applicable in consumer products.

At present, no economically feasible method for the direct recovery of oryzanol from crude oil is known. In European Patent Application no. 503 650, a process for the production of ferulic acid by hydrolysing γ-oryzanol is described. Following this disclosure, the direct extraction of γ-oryzanol from waste material is economically not feasible due to high manufacturing costs.

In German patent document DE 1,301,002, a process is described for the recovery of oryzanol from the rice bran fatty acid distillation residue by the extraction with an alkali hydroxide (<0.5N) and subsequently neutralizing the so obtained extract with an organic carbonic acid (pH>6). The yield obtained with this process is not more than 22% of the total amount of oryzanol present.

In German patent document DE 1,196,321 the use of a specific alcohol and the use of an alkalihydroxide, in an organic solvent is described, resulting in a yield of 36.5% of the oryzanol present.

JP-A-51123811 discloses a process for concentrating and separating out oryzanol by adding rice bran oil and/or rice germ oil to an aqueous alkali solution, separating the first neutral oil layer, adding said oil layer to the aqueous alkali solution, and separating so as to recover oryzanol alkali salt free from water, and hydrolysis.

JP-A-54160400 discloses the recovery of pure fatty acid rice bran oil residue comprising decomposition, washing, dehydration and distillation.

The Journal of Food Science and Technology, vol.23, sept/oct 1986, pp 270-273, G.S.Seetharamaiah and J.V. Prabhakar reports a method for obtaining oryzanol from soap stock material. A major disadvantage of this process is the use of solvents, the use of (expensive) column chromatography, the low final oryzanol content of the concentrate and the relatively low yield of 58% that has been obtained.
In recent years there has been considerable interest in oryzanol due to its possible pharmacological uses, in fat based food products, and in cosmetic uses. Thus, an increased desire for a more economical process for the obtaining of pure oryzanol or oryzanol rich concentrates exists.

Now, a process is found by which an oryzanol concentrate can be obtained in a highly economical manner and at high yield from crude oil which contains oryzanol, such as rice bran oil, and in addition allows the oryzanol to be obtained to be substantially free of any undesired components.
The present invention pertains to a process for the obtaining of an oryzanol concentrate from an oryzanol containing fatty substance which preferably is a crude oil, by the steps of
- A: at least one of the process steps of
A1 removal of phospholipids present and
A2 free fatty acids removal, preferably by the use of stripping;
- B: alkali neutralization of the obtained product;
- C: separation and removal of the obtained oil phase

Step A can be carried out before step B or after step C. Step C is to be carried out after step B. If both step A1 and A2 are carried out, it is preferred that step A1 is carried out before or during free fatty acid removal (step A2).

The presently found process allows to obtain a concentrate which comprises over 60%, in particular over 75%, up to over 90% and higher of the oryzanol present in the starting material.

The starting material can be a crude oil or an acid oil resulting from the refining of a crude oil.
The starting material is preferably a crude oil containing oryzanol, such as rice bran oil, corn bran oil, or a mixture thereof,. The process of this invention also covers the obtaining of oryzanol in a process encompassing all steps as indicated in the claims, but carried out at different places. For example, the process of this invention also encompasses the FFA removal of a crude oil, the optional storage and transport of the obtained intermediate product, and the subsequent carrying out of the further steps.

In this application, oryzanol is used to indicate any type of steryl cinnamic acid derivatives. Oryzanol is present in several oils obtained from plant material, such as rice bran and corn bran.
Oryzanol or γ-oryzanol found in rice bran oil is reported to comprise a mixture of ferulic acid esters of at least one or more phytosterols (4-desmethylsterols, 4-monomethylsterol and 4,4'-dimethylsterols and their stanol equivalents).
Components in the oryzanol or steryl cinnamic acid derivatives obtainable with the process of the present invention include, for example, ferulic acid esters such as phytosterols like campesterol, stigmasterol, B-sitosterol, cycloartanol, cycloartenol, 24-methylenecycloartanol, and cyclobranol. It further includes stanol and sterol esters of single phenolic compounds like 4-hydroxybenzoic acid, 4-hydroxyphenyl ethanol, 4-hydroxy-3-methoxycinnamic acid, 3,4-dihydroxycinnamic acid, 4-hydroxy-3-methoxybenzoic acid, trans-p-coumaric acid, 3,4,5-trihydroxybenzoic acid and 3,5-dimethoxy-4-hydroxycinnamic acid.

Rice bran oil is an oil known to be relatively rich in oryzanol, levels of oryzanol are reported to be between 1-2.9%, although applicants never have seen any data supporting the presence of oryzanol in rice bran oil at levels of more than 1.5%. Corn bran oil is reported to have oryzanol (or steryl cinnamic acid derivatives) levels of up to 0.7%.

The concentrate comprises various colour components. Depending on the envisaged end use, it may be desired to remove one or more of these components, e.g. for the use of the concentrate as such in food products. If removal of the brown-colour is envisaged, it is required that the phospholipids are removed prior to the alkali neutralization step. In that case, step A will thus encompass at least the removal of phospholipids present (step A1). Up till now, the chemical structure of said brown colour is not reported to have been identified. The brown colour itself can be removed by a bleaching step, known per se in the art.
Accordingly, a particular embodiment regards a process for the obtaining of an oryzanol concentrate from an oryzanol containing fatty substance which preferably is a crude rice bran oil, by the steps of
- A1: removal of phospholipids present;
- A2: optionally, the removal of free fatty acids, preferably by the use of stripping;
- B: alkali neutralization of the obtained product;
- C: separation and removal of the obtained oil phase;
- D: bleaching the obtained product prior to step B or after step C.

The bleaching step (D) can be carried out prior to the alkali neutralization, i.e. prior to step B, or after the removal of the obtained oil phase, i.e. after step C. There is no requirement for the order of carrying out steps D, A1 and, if carried out, step A2, with the proviso that if step A2 is carried out, step A1 is to be done before or during step A2. It is preferred, however, to carry out the steps of the process of the invention in the order of A1, D, B and C. If step A2 is carried out as well, this is preferably done after step D and before step B, or after step C. For this step A2, a preference exists to carry it out prior to step B.
In a preferred process of this embodiment, the free fatty acids are removed. It is preferred to bleach and remove free fatty acids prior to the alkali neutralization step, as this allows a higher purity of the end product to be obtained.

In another embodiment of this invention, a process is carried out for the obtaining of an oryzanol concentrate from an oryzanol containing fatty substance which preferably is a crude rice bran oil, by the steps of
- A1: optionally, the removal of phospholipids present;
- A2: the removal of free fatty acids, preferably by the use of stripping;
- B: alkali neutralization of the obtained product;
- C: separation and removal of the obtained oil phase;
- D: optionally, bleaching the obtained product prior to step B or after step C.

In this specific embodiment of the invention, it is preferred that also a phospholipid removal step is carried out. Highly pure and white oryzanol crystals can be obtained by removal of phospholipids to a level below 35 ppm, bleaching and free fatty acid removal. The order of carrying out these steps is of less relevance and the conditions indicated for the other embodiments of this invention apply here as well. It was found that best results and highest purity is obtained if carried out in the order listed above, whereby step D is preferably carried out either between steps A1 and A2, or after step A2.

In its highest preferred embodiment a process is applied by which highly pure, high concentrated oryzanol is obtained at very high yields. This can be obtained by the treatment of a crude oil by the subsequent steps of
- A1: the removal of phospholipids present, preferably by using a superdegumming process, followed by ;
- D: bleaching the obtained product and
- A2: the removal of free fatty acids preferably by stripping;
- B: alkali neutralization of the obtained product using alkali hydroxide and subsequently
- C: separation and removal of the obtained oil phase.

This includes the carrying out of two of more steps simultaneously. In a particular embodiment, sodium hydroxide is used in the alkali neutralization step. It is highly preferred to use rice bran oil as the fatty substance. By this process, over 90% of the oryzanol present in the crude rice bran oil can be recovered.

The process presently found is in particular fit for the use of a crude rice bran oil comprising oryzanol as the starting material. However, it can be desirable under specific circumstances to start with a product which in the process of the main claim is an intermediate product, for example in the case that such a product is the best available or most economical product. These products are also covered by the present invention.

The oil phase which is removed from the present process stream can be treated as necessary and used as deemed fit. Many applications, including the use as a refined oil by consumers are possible.

The alkali neutralization step includes the neutralization of the oryzanol, which is of acidic nature in itself. Suitable media for such neutralization can be chosen from the group of NaOH, KOH, LiOH, Na₂CO₃, K₂CO₃, NaHCO₃, with a preference for NaOH and KOH.
By neutralizing the product with a thereto suitable medium such as alkali hydroxide or ammonia, preferably at elevated temperature, an refined oil product is obtained and, as a second stream, an alkalic aqueous phase (pH > 9) comprising a substantial part of the oryzanol. Sodium hydroxide is in particular desirable to use as alkali hydroxide at a concentration in the range of 0.4-6N, preferably in the range of 1-6N, further preferred in the range of 3-5N.

The removal of phospholipids can be done by any thereto suitable method known in the art. In particular, acid degumming is a well known and suitable method. Preferably, a superdegumming process, for example as described in US patent US 4,049,686 is applied. In one preferred embodiment, a crude oil is treated by any of these methods in such a way that the P content in resulting product is less than 35 ppm (parts per million).

The free fatty acids removal can be carried out by any method known in the art. Examples of suitable methods are stripping or deodorization, soda ash neutralization and ammonia neutralization or neutralization with any other base which selectively neutralizes free fatty acids over oryzanol. Normally, these are weak bases. It is preferred to remove the free fatty acids by stripping of the oil, this method is in particular suitable for removing substantially all free fatty acids present in the product. Best results for oryzanol winning can be found if the product is steamed to reduce the level of free fatty acids to below 0.1%. In a specific embodiment, packed column stripping was found to be advantageous, in particular where heavy components are to be removed.

Bleaching of the substantially phospholipid free oil is preferably done by the use of carbon and/or bleaching earth, suitable amounts being in the range of 0.1-3wt%, with 1-1.5 wt% being preferred for the bleaching earth. The weight amounts are based on the product to be bleached. The bleaching process is suitably carried out at a temperature in the range of 80-100°C.

In a preferred embodiment, the oryzanol concentrate product resulting from any of the above indicated embodiments, is treated subsequently by the steps of:
- F: separation into aqueous and oil phase by the addition of an acid to a pH < 5, preferably to a pH <2 and subsequent removal of any non-fatty substances such as water and the salts of the acid(s) used from the oil phase;
By this acidification, the oryzanol is dissolved in the oil phase. Removal of the aqueous phase results in a higher concentration of the oryzanol and removal of undesired components, and in particular in a pure concentrate substantially composed of glycerides, free fatty acids and oryzanol.

In a particular embodiment, the oryzanol concentrate product resulting from any of the above indicated embodiments, is treated subsequently by the steps of: F separation into an aqueous and an oil phase by the addition of an acid to a pH < 5, preferably to a pH <2 and subsequent removal of any non-fatty substances such as water, alkali hydroxide and acid used from the oil phase.

In a specific embodiment, in such a process, the acid used for separation into an aqueous and an oil phase comprises phosphoric acid, citric acid, sulphuric acid, hydrochloric acid or mixtures thereof.
In particular, this invention discloses a process as indicated above, wherein a second bleaching step and/or free fatty acids removal treatment is carried out after acidification and removal of any non-fatty substances such as water, alkali hydroxide and acid used from the oil phase.
In a further specified embodiment, in such a process the concentrate obtained from any of these processes is cooled or dry fractionated in order to crystallize oryzanol from it.
Also claimed is the oryzanol concentrate obtainable by any of the processes disclosed herein.
In yet another embodiment, the invention is about an oryzanol concentrate obtainable by a process as disclosed herein and in which step F is carried out, wherein the concentrate substantially comprises a fat or oil and oryzanol. In a further defined embodiment, the fat or oil used in this so obtainable oryzanol concentrate is rice bran oil.

In an alternative and suitable manner, the oil and water phase are separated by heating up the oil phase to a temperature of 70-150°C, preferably up to 115-130° C, further preferred 120° C after having added a suitable acid to pH<5, preferably pH<3, more preferred <2. For the acidification, a thereto suitable acid which preferably has a of less than 4 for a monobasic acid or equivalent pKₐ. Examples of suitable acids are citric acid, sulphuric acid, phosphoric acid, hydrochloric acid, or other acids, or mixtures of any of these acids. Upon acidification a white emulsion containing oryzanol and oil is sometimes formed. In this case said emulsion can be broken by adding oil or by heating the emulsion above 100° C, preferably up to 115-130° C, further preferred 120° C after having added a suitable acid to pH<5, preferably pH<2, after which the aqueous phase can be separated and removed so that an oryzanol and oil containing phase is obtained. The separation can be carried out by, e.g., the addition of an oil, or by the heating of the product as described above. The non-oily phase, comprising water, alkali hydroxide and the acid or any products thereof is removed from the process stream. The remaining oryzanol and oil phase can then be further treated in order to obtain pure oryzanol, or can be used as such.

The product resulting is an oryzanol concentrate, the oryzanol concentration being at least 10%, preferably at least 15%, further preferred at least 20%. In a further preferred embodiment, a concentrate is obtained having a concentration of at least 33% and even further preferred of at least 40%.

The concentrate of oryzanol obtained after step F can be applied to crystallize pure oryzanol from. If it is envisaged to crystallize, it is required that step A at least encompasses the removal of free fatty acids (step A2). To crystallize the oryzanol from it, it is required that the concentrate comprises more than 2% oryzanol. Of course, a more economical process for crystallizing is obtained if the concentration is higher, e.g. at least 10%, at least 20%, with concentrations of at least 33% being even more preferred. The concentrate is preferably having an oryzanol level of at least 40%.

It can be desired to use the concentrate obtained after step F as such, or to dilute the concentrate further with any oil or other type of diluent, depending on the end use envisaged. The concentrate can also be used for crystallizing pure oryzanol crystals from it.
The use of the concentrate as such can be for example in food products,in cosmetic products, or in the chemical industry.

Any further treatment of the so obtained concentrate can be carried out depending on the envisaged use. For obtaining a substantially colourless concentrate of high oryzanol content, the obtained fatty oryzanol comprising concentrate can be bleached a second time, i.e. one time prior to the neutralization step and one time after having separated and removed the oil phase . Preferably, a second bleaching step is carried out after acidification of the concentrate, i.e. after step F.
Also, a second free fatty acids removal treatment, which highly preferably is a deodorization process, can be carried out.

Depending on the process embodiment carried out, also free fatty acids, phospholipids and/or colorants can be present. In its most preferred embodiment, however, these components are present in very small amounts or not present at all. This can be obtained in particular by treatment of a crude rice bran oil by the steps indicated above as step A1, D, A2, B, C and F. In this embodiment, the yield of oryzanol obtained is very high and can be over 90%, preferably over 95%, and purity and concentration can be at levels over 25% or even 33%, and 99%, respectively.

Optionally, the obtained concentrate is mixed with some crude or refined oil to obtain the oryzanol level desired. This should be done after having removed the oil phase as indicated under step C. Preferably, the oil is added after this removal step and prior to any second bleaching and/or deodorization treatment, if these treatments are performed. This is in particular suitable for the use in consumer products such as cosmetics and food products, e.g. like fat based food products such as spreads. Any amount of oil can be added as desired. Suitable amounts will be in the range of 1:1-1:20, and preferably in the range of 20:1 to 1:20.

Crystallization of the oryzanol from the concentrate can be obtained upon cooling the concentrate as such or dissolved in a solvent. Depending on the ingredients of the concentrate, other methods may be applicable as well. The yellowish or white oryzanol crystals can be removed and used, and an oryzanol concentrate having an oryzanol concentration of less than 2% is left. It was found that the oryzanol crystals that can result from this process can be of a very high purity. Even more, purity levels of over 99% were found without expensive and long processing.

The obtained product is preferably further treated, preferably the treatment being a bleach and a deodorization treatment such as stripping carried out under conditions and with bleaching agents similar to those used in the bleaching and deodorizing treatment of the crude and bleached oil respectively.
Accordingly, an oryzanol concentrate is obtained which can be used as such, or from which oryzanol can be crystallized.

Thus, in a highly preferred process for obtaining pure oryzanol at high yield, a crude rice bran oil is treated by the well known superdegumming process as described in US patent no. US 4,049,686, then treated in a bleaching process using 0.5-2% of bleaching earth, deodorising/stripping the product in a process well known to the man skilled in the art per se, deacidifying the resulting oil in a reactor at elevated temperature, preferably in the range of 60-100°C (product temperature), with in particular 90°C being a desired temperature for the process, the deacidification process providing good results by using a 4N NaOH solution, stirring for 30-90 minutes (other times can be applied as well) in a reactor. In this preferred process, the resulting product is split, resulting in a refined rice bran oil (after washing and drying of it hardly containing any oryzanol) and an aqueous phase which can contain more than 80%, and by choosing optimum process conditions, over 90% or more of the oryzanol contained by the crude starting material oil. The rice bran oil can be either sold as such or used for further processing. For example, rice bran oil can be applied in preparing foods.
The water and lye mixture is then treated with an acid such as citric acid and/or phosphoric acid, and optionally, also some oil can be added. Depending on the end use, any oil can be applied. For the use in food, for example, it is sometimes desired to use sunflower oil or refined or crude rice bran oil. Splitting and separation, preferably at a temperature chosen in the range of 60-90 C allows the removal of an stream of an aqueous phase from the oil phase which comprises the oryzanol. Preferably, the concentrate is mixed with degummed sunflower oil and bleached and deodorized to obtain an oil blend rich in oryzanol for use in spreads, comprising oil and 0.5 - 40% oryzanol. Optionally the oryzanol concentrate is used as such to obtain pure oryzanol after crystallisation and separation.

The invention is further illustrated by the following examples:

### EXAMPLE I

A crude rice bran oil is used obtain the oryzanol from. The used rice bran oil consisted of 1.6% oryzanol, 3.0% free fatty acids (FFA), 250 ppm P and mono-, di- and triacylglycerides.

The phospholipids are removed by superdegumming, as described in US patent US 4,049,686. Next the oil is bleached using 1.5% bleaching earth. Then the oil is stripped to remove the free fatty acids to a level of 0.1%. All three processes are carried out by methods well known in the art.

The obtained product consists 1.6% oryzanol, 0.1% FFA, <2 ppm phosphor and the rest of glycerides. Then 1000 g of this product was heated to 90°C in a closed vessel with spiral stirrer and stirred fast. Then 19.6 ml water was added and stirred for 5 min. also fast. Then, 19.6 ml of a 4.0 N NaOH solution was added and stirring for 30 minutes. NaOH excess was 200% on a molar basis. 10% water was added, and after 5 min. slow stirring, having left to stand 30 min. Separation of aqueous phase and the fat phase took place. The fat phase was washed twice with 10% water and the washings were combined with the first aqueous phase.

The so obtained aqueous phase containing the oryzanol or oryzanol salt is heated to 90°C in a baffled reactor with a turbine stirrer. Then, 27 ml phosphoric acid solution of 7.2 mol/l is used to acidify the mixture to obtain a pH lower than 2 in the aqueous phase. After fast stirring 10 min. the mixture stood for more than 1 hour. Separation of the aqueous phase and the fat phase took place. 36.5 g of fat phase was obtained which was analysed to consist of 40% oryzanol, glycerides and some FFA. 91.2 % of the oryzanol was recovered.

### Example II

Example I was repeated using 29.4 kg of crude rice bran oil. This time 826.4 gram of oryzanol concentrate was obtained containing 44.8% oryzanol.

### Example IIA

400.0 gram of this concentrate was mixed with 5.5 kg of degummed sunflower oil, obtaining an oil blend with 3% oryzanol. This blend was washed twice with 10% water at 90°C in a closed vessel with stirrer. Then this oil blend was successively bleached using 1.0% bleaching earth and deodorized at 230 °C. This blend was used to prepare a margarine containing 2% oryzanol on product.

### Example IIB

400.0 gram of this concentrate was heated to 120°C in a closed vessel and washed twice with 10% water. Then the concentrate was filtered using Seitz-K100™ filter paper. Then the oil was dried under reduced pressure of 100 mbar. The so obtained washed and dried oryzanol concentrate was cooled to 70°C at a rate of 1°C per minute under slow stirring. The product was filtered using a Seitz-K100 filter paper. The so obtained filter cake consisted of yellowish white oryzanol crystals having a purity of 79.6%.

### EXAMPLE III

### III A - treatment

Physically refined rice bran oil (RBO) was heated to 90°C. The rice bran oil (RBO) contained 1.65% oryzanol. The RBO was split in 5 portions, amounts are indicated in the table. These were treated in a manner similar as indicated in Example I. Amounts and processing conditions were as listed in the Table III.

**TABLE III**

| **STARTING PRODUCTS** | | **A** | **B** | **C** | **D** | **E** |
|---|---|---|---|---|---|---|
| OIL | | | | | | |
| amount | g | 1011 | 1125 | 1091 | 1123 | 1109 |
| temperature | °C | 90 | 90 | 90 | 90 | 90 |
| oryzanol | % | 1.65 | 1.65 | 1.65 | 1.65 | 1.65 |
| LYE CONCENTRATION | | 4N | 4N | 4N | 4N | 4N |
| excess | % | 200 | 0 | 50 | 100 | 100 |
| amount | ml | 19.8 | 7.3 | 10.7 | 14.6 | 14.4 |
| WATER | | | | | | |
| amount | ml | 20 | 7.3 | 11 | 14.6 | 14.4 |
| LYE MIXING | min | 30 | 30 | 30 | 30 | 30 |
| SEPARATION | min | 45 | 45 | 45 | 45 | 45 |
| WASHING | | | | | | |
| number | | 5 4 | | 4 | 4 | 4 |
| amount | % | 10 | 10 | 10 | 10 | 10 |
| DEACIDIFIED OIL | | | | | | |
| amount | g | 948 | 1101 | 1018 | 1100 | 1090 |
| water | % | 0.72 | 0.83 | 0.87 | 1.05 | 1.8 |
| oryzanol | % | 0.25 | 1.24 | 1.05 | 0.65 | 0.75 |
| **Analysis product** | | **A1** | **B1** | **C1** | **D1** | **E1** |

The products resulting herefrom are analysed, and are listed as analysis products A1, B1, C1, D1, and E1. These products (Except for product A1) were further treated with processes and conditions as listed in the following table.

**TABLE III - continued**

| **Analysis product** | | **A1** | **B1** | **C1** | **D1** | **E1** |
|---|---|---|---|---|---|---|
| **OIL** | | | | | | |
| amount | g | | 1097 | 1000 | 1076 | 1067 |
| temperature | °C | | 90 | 90 | 90 | 90 |
| **LYE CONCENTRATION** | | | 4N | 4N | 4N | 4N |
| excess | % | | 200 | 200 | 200 | 100 |
| amount | ml | | 16.5 | 12.8 | 8.5 | |
| WATER | | | | | | |
| amount | ml | | 7.5 | 4 | - | - |
| LYE MIXING | min | | 30 | 30 | 30 | 30 |
| SEPARATION | min | | 45 | 45 | 45 | 45 |
| WASHING | | | | | | |
| number | | | 4 | 4 | 4 | 4 |
| amount | % | | 10 | 10 | 10 | 10 |
| DEACIDIFIED OIL | | | | | | |
| amount | g | | 1028 | 945.7 | 1036 | 1027 |
| water | % | | 0.59 | 0.43 | 0.39 | 0.82 |
| oryzanol | % | | 0.26 | 0.19 | 0.36 | 0.38 |
| **Analysis product** | | | **B2** | **C2** | **D2** | **E2** |
| | | | | | | |

**TABLE III**

| **-B1 RESULTS** | | **A1** | **B1** | **C1** | **D1** | **E1** |
|---|---|---|---|---|---|---|
| Oryzanol Stock | **g** | 525 | 329 | 504.2 | 464.6 | 494.3 |
| Total blended Concentrate | **g** | 238 | 81.4 | 114.6 | 197.8 | 176.4 |
| Oryzanol concentration | **wt%** | 5.94 | 5.66 | 6.60 | 5.04 | 5.37 |
| Added Sunflower oil | **g** | 180 | 48.3 | 32 | 173.5 | 131.9 |
| Crude concentrate | **g** | 58 | 33.1 | 82.6 | 24.3 | 44.5 |
| Oryzanol removed from RBO | **g** | 14.1 | 4.6 | 7.6 | 10.0 | 9.5 |

**TABLE III**

| **-B2 RESULTS** | | **A1** | **B2** | **C2** | **D2** | **E2** |
|---|---|---|---|---|---|---|
| Oryzanol Stock | **g** | | 502.5 | 485 | 428.5 | 506.5 |
| Total blended Concentrate | **g** | | 195 | 151 | 54.9 | 70.5 |
| Oryzanol concentration | **wt%** | | 5.63 | 5.23 | 5.24 | 5.65 |
| Added Sunflower oil | **g** | | 123 | 89 | 32.8 | 39.2 |
| Crude concentrate | **g** | | 72 | 62 | 22.1 | 31.3 |
| Oryzanol removed from RBO | **g** | | 11.0 | 7.9 | 2.9 | 4.0 |

### EXAMPLE IV

A crude rice bran oil is used obtain the oryzanol. The used rice bran oil consisted of 1.7% oryzanol, 1.7% free fatty acids (FFA), 315 ppm P and mono-, di- and triacylglycerides.

The phospholipids are removed by superdegumming, as described in US patent US 4,049,686. Next the free fatty acids of the oil are removed via soda ash neutralisation using a 7N Na₂CO₃ solution dosing at a 150% excess calculated on the basis of the free fatty acids and the oryzanol content. Both processes are carried out by methods well known in the art.

The obtained product consists 1.6% oryzanol, 0.2% FFA, <2

ppm phosphor and the rest of glycerides. Then 1000 g of this product was used to recover the oryzanol from in a similar way as described in example I. This time 25.9 gram of oryzanol concentrate was obtained containing 35.0% oryzanol.

### Example V

A soda ash neutralized, bleached and deodorized rice bran oil is used to obtain the oryzanol. The rice bran oil consists of 1.2% oryzanol, <0.1% FFA and glycerides. Then 191.7 kg of this product was used to recover the oryzanol from in a similar way as described in example I. This time 3.9 kg of oryzanol concentrate was obtained containing 34.0% oryzanol.

The oryzanol concentrations and weights given in the examples are based on an UV-spectroscopy oryzanol analysis well known in the art.

## Claims

1. Process for the obtaining of an oryzanol concentrate from an oryzanol containing fatty substance, wherein the oryzanol is any type of steryl cinnamic acid derivative, by the steps of
A at least one of the process steps of
A1 removal of phospholipids present and
A2 free fatty acids removal;
B alkali neutralization of the obtained product;
C separation and removal of the obtained oil phase

2. Process according to claim 1, wherein the fatty substance is a rice bran oil, a corn bran oil, or a mixture thereof.

3. Process according to any one of claims 1-2, comprising the steps of
A1 removal of phospholipids present;
A2 optionally, the removal of free fatty acids;
B alkali neutralization of the obtained product;
C separation and removal of the obtained oil phase;
D bleaching the obtained product prior to step B or after step C.

4. Process according to any one of claims 1-2, comprising the steps of
A1 optionally, the removal of phospholipids present;
A2 the removal of free fatty acids;
B alkali neutralization of the obtained product;
C separation and removal of the obtained oil phase;
D bleaching the obtained product prior to step B or after step C.

5. Process according to any one of claims 1-2, comprising the subsequent steps of
A1 removal of phospholipids present, followed by;
D bleaching the obtained product;
A2 the removal of free fatty acids;
B alkali neutralization of the obtained product;
C separation and removal of the obtained oil phase.

6. Process according to any one of claims 1-5, wherein sodium hydroxide is used in the alkali neutralization step.

7. Process according to any one of claims 1-6, wherein the free fatty acids removal is obtained by stripping.

8. Process according to any one of claims 1-7, wherein the phospholipids are removed to a level below 35 ppm P by a superdegumming process.

9. Process according to any one of claims 1-8, wherein the oryzanol concentrate product obtained from a process according to any of claims 1 to 8 is treated subsequently by the steps of:
F separation into an aqueous and and oil phase by the addition of an acid to a pH < 5, and subsequent removal of any non-fatty substances such as water, alkali hydroxide and acid used from the oil phase.

10. Process according to claim 9, wherein the acid used for separation into an aqueous and an oil phase comprises phosphoric acid, citric acid, sulphuric acid, hydrochloric acid or mixtures thereof.

11. Process according to any one of claims 9 to 10, wherein a second bleaching step and/or free fatty acids removal treatment is carried out after acidification and removal of any non-fatty substances such as water, alkali hydroxide and acid used from the oil phase.

12. Process according to any one of claims 1-11, wherein the concentrate obtained from any of these processes is cooled or dry fractionated in order to crystallize oryzanol from it.

13. Oryzanol concentrate obtainable by a process according to any one of claims 1-11.

14. Oryzanol concentrate obtainable by a process according to any one of claims 9-11, wherein the concentrate comprises a fat or oil and oryzanol.

15. Oryzanol concentrate obtainable by a process according to claim 14, wherein the fat or oil is rice bran oil.

## Patentansprüche

1. Verfahren zur Gewinnung eines Oryzanol-Konzentrats aus einer Oryzanol enthaltenden Fettsubstanz, worin das Oryzanol jede Art von Sterylzimtsäure-Derivat darstellt, mit den Schritten:
A mindestens einem der Verfahrensschritte:
A1 Entfernen der vorhandenen Phospholipide und
A2 Entfernen der freien Fettsäuren,
B Alkali-Neutralisation des erhaltenen Produkts und
C Abtrennen und Entfernen der erhaltenen Ölphase.

2. Verfahren nach Anspruch 1, worin die Fettsubstanz ein Reiskleieöl, ein Maiskleieöl oder eine Mischung hiervon darstellt.

3. Verfahren nach mindestens einem der Ansprüche 1 oder 2. umfassend die Schritte:
A1 Entfernen der vorhandenen Phospholipide,
A2 gegebenenfalls Entfernen der freien Fettsäuren,
B Alkali-Neutralisation des erhaltenen Produkts,
C Abtrennen und Entfernen der erhaltenen Ölphase und
D Bleichen des erhaltenen Produkts vor Schritt B oder nach Schritt C.

4. Verfahren nach mindestens einem der Ansprüche 1 oder 2. umfassend die Schritte:
A1 gegebenenfalls Entfernen der vorhandenen Phospholipide,
A2 Entfernen der freien Fettsäuren,
B Alkali-Neutralisation des erhaltenen Produkts,
C Abtrennen und Entfernen der erhaltenen Ölphase und
D Bleichen des erhaltenen Produkts vor Schritt B oder nach Schritt C.

5. Verfahren nach mindestens einem der Ansprüche 1 oder 2. umfassend die nachfolgenden Schritte:
A1 Entfernen der vorhandenen Phospholipide. gefolgt von
D Bleichen des erhaltenen Produkts.
A2 Entfernen der freien Fettsäuren.
B Alkali-Neutralisation des erhaltenen Produkts und
C Abtrennen und Entfernen der erhaltenen Ölphase.

6. Verfahren nach mindestens einem der Ansprüche 1 bis 5. worin Natriumhydroxid im Alkali-Neutralisationsschritt eingesetzt wird.

7. Verfahren nach mindestens einem der Ansprüche 1 bis 6, worin das Entfernen der freien Fettsäuren durch Strippen erhalten wird.

8. Verfahren nach mindestens einem der Ansprüche 1 bis 7, worin die Phospholipide durch ein Super-Degummierungsverfahren auf einen Gehalt unter 35 ppm P entfernt werden.

9. Verfahren nach mindestens einem der Ansprüche 1 bis 8. worin das gemäß einem Verfahren nach mindestens einem der Ansprüche 1 bis 8 erhaltene Oryzanol-Konzentratprodukt mit den nachfolgenden Schritten behandelt wird:
F Auftrennen in eine wäßrige und eine Ölphase durch die Zugabe einer Säure auf einen pH <5 und nachfolgendes Entfernen jeder Nicht-Fettsubstanz, wie Wasser, Alkalihydroxid und eingesetzten Säure aus der Ölphase.

10. Verfahren nach Anspruch 9, worin die für die Abtrennung in eine wäßrige und eine Ölphase eingesetzte Säure Phosphorsäure. Zitronensäure, Schwefelsäure, Salzsäure oder Mischungen hiervon umfaßt.

11. Verfahren nach mindestens einem der Ansprüche 9 oder 10, worin ein zweiter Bleichschritt und/oder eine Behandlung zur Entfernung der freien Fettsäuren nach dem Ansäuern durchgeführt wird und Entfernen jeder Nicht-Fettsubstanz, wie Wasser, Alkalihydroxid und eingesetzter Säure aus der Ölphase.

12. Verfahren nach mindestens einem der Ansprüche 1 bis 11. worin das nach irgendeinem dieser Verfahren erhaltene Konzentrat abgekühlt oder trockenfraktioniert wird, um hieraus Oryzanol auszukristallisieren.

13. Oryzanol-Konzentrat, erhältlich durch ein Verfahren nach mindestens einem der Ansprüche 1 bis 11.

14. Oryzanol-Konzentrat, erhältlich durch ein Verfahren nach mindestens einem der Ansprüche 9 bis 11, worin das Konzentrat ein Fett oder Öl und Oryzanol umfaßt.

15. Oryzanol-Konzentrat, erhältlich durch ein Verfahren nach Anspruch 14, worin das Fett oder Öl Reiskleieöl darstellt.

## Revendications

1. Procédé d'obtention d'un concentré d'oryzanol à partir d'une substance grasse contenant l'oryzanol, dans lequel l'oryzanol est tout type de dérivé d'acide stéryl-cinnamique, par les stades de :
A. au moins l'un des stades de procédé de :
A1 enlèvement des phospholipides présents et
A2 enlèvement des acides gras libres
B neutralisation alcaline des produits obtenus
C séparation et enlèvement de la phase huileuse obtenue.

2. Procédé selon la revendication 1, dans lequel la substance grasse est une huile de son de riz, une huile de son de blé ou leur mélange.

3. Procédé selon l'une quelconque des revendications 1 à 2, comprenant les stades de :
A1 : enlèvement des phospholipides présents,
A2 facultativement, enlèvement des acides gras libres,
B : neutralisation alcaline du produit obtenu,
C : séparation et enlèvement de la phase huileuse obtenue,
D : blanchiment du produit obtenu avant le stade B ou après le stade C.

4. Procédé selon l'une quelconque des revendications 1 à 2, comprenant les stades de :
A1 facultativement, enlèvement des phospholipides présents,
A2 enlèvement des acides gras libres,
B neutralisation alcaline du produit obtenu,
C séparation et enlèvement de la phase huileuse obtenue,
D blanchiment du produit obtenu avant le stade B ou après le stade C.

5. Procédé selon l'une quelconque des revendications 1 à 2, comprenant les stades suivants de :
A1 enlèvement des phospholipides présents, puis
D blanchiment du produit obtenu,
A2 enlèvement des acides gras libres,
B neutralisation alcaline du produit obtenu,
C séparation et enlèvement de la phase huileuse obtenue,

6. Procédé selon l'une quelconque des revendications 1 à 5, dans lequel on utilise l'hydroxyde de sodium dans le stade de neutralisation alcaline.

7. Procédé selon l'une quelconque des revendications 1 à 6, dans lequel on obtient l'enlèvement des acides gras libres par stripage.

8. Procédé selon l'une quelconque des revendications 1 à 7, dans lequel on enlève les phospholipides à une quantité inférieure à 35 ppm de P par un procédé de superdégommage.

9. Procédé selon l'une quelconque des revendications 1 à 8, dans lequel le produit de concentré d'oryzanol obtenu à partir d'un procédé selon l'une quelconque des revendications 1 à 8 est traité ensuite par les stades de :
F séparation en une phase aqueuse et une phase huileuse par l'addition d'un acide à un pH < 5 et enlèvement consécutif des substances non grasses comme l'eau, l'hydroxyde alcalin et l'acide utilisés dans la phase huileuse.

10. Procédé selon la revendication 9, dans lequel l'acide utilisé pour la séparation en phases aqueuse et huileuse comprend l'acide phosphorique, l'acide citrique, l'acide sulfurique, l'acide chlorhydrique et leur mélange.

11. Procédé selon l'une quelconque des revendications 9 à 10, dans lequel on effectue un second stade de blanchiment et/ou un traitement d'enlèvement des acides gras libres après l'acidification et l'enlèvement des substances non grasses comme l'eau, l'hydroxyde alcalin et l'acide utilisés dans la phase huileuse.

12. Procédé selon l'une quelconque des revendications 1 à 11, dans lequel le concentré obtenu dans l'un quelconque de ces procédés est refroidi ou fractionné à sec afin de cristalliser l'oryzanol.

13. Concentré d'oryzanol qu'on peut obtenir par un procédé selon l'une quelconque des revendications 1 à 11.

14. Concentré d'oryzanol qu'on peut obtenir par un procédé selon l'une quelconque des revendications 9 à 11, dans lequel le concentré comprend une graisse ou une huile et de l'oryzanol.

15. Concentré d'oryzanol qu'on peut obtenir par un procédé selon la revendication 14, dans lequel la graisse ou l'huile est l'huile de son de riz.
